# EUROPEAN PATENT SPECIFICATION

(11) **EP 3 924 772 B1**
(45) Date of publication and mention of the grant of the patent: **06.11.2024**
(21) Application number: 19914831.3
(22) Date of filing: 16.12.2019
(51) Int. Cl.: G02B 30/00, G02B 26/08

(54) **MULTIVIEW DISPLAY AND METHOD HAVING LIGHT CONTROL FILM**
MEHRFACHANSICHTSANZEIGE UND VERFAHREN MIT LICHTSTEUERUNGSFOLIE
DISPOSITIF D'AFFICHAGE À VUES MULTIPLES ET PROCÉDÉ AYANT UN FILM DE COMMANDE DE LUMIÈRE

(30) Priority: 16.02.2019 US 201962806807 P; 29.04.2019 WO PCT/US2019/029730
(43) Date of publication of application: 22.12.2021
(73) Proprietor: LEIA Inc., Menlo Park, CA 94025 (US)
(72) Inventor: FATTAL, David A., Menlo Park, California 94025 (US); MA, Ming, Menlo Park, California 94025 (US)
(74) Representative: Carpmaels & Ransford LLP
(86) International application number: PCT/US2019/066630
(87) International publication number: WO 2020/167374

(56) References cited:
- EP-A2- 0 606 162
- WO-A1-2018/213101
- WO-A1-2018/213101
- US-A1- 2013 057 159
- US-A1- 2013 335 538
- US-A1- 2014 063 213
- US-A1- 2016 219 271
- US-A1- 2018 188 691

## Description

### CROSS-REFERENCE TO RELATED APPLICATIONS

This application claims priority to U.S. Provisional Application Serial No. 62/806,807, filed on February 16, 2019 and also to International Patent Application No. PCT/US2019/029730, file on April 29, 2019.

### STATEMENT REGARDING FEDERALLY SPONSORED

### RESEARCH OR DEVELOPMENT

N/A

### BACKGROUND

Electronic displays are a nearly ubiquitous medium for communicating information to users of a wide variety of devices and products. Most commonly employed electronic displays include the cathode ray tube (CRT), plasma display panels (PDP), liquid crystal displays (LCD), electroluminescent displays (EL), organic light emitting diode (OLED) and active matrix OLEDs (AMOLED) displays, electrophoretic displays (EP) and various displays that employ electromechanical or electrofluidic light modulation (e.g., digital micromirror devices, electrowetting displays, etc.). Generally, electronic displays may be categorized as either active displays (i.e., displays that emit light) or passive displays (i.e., displays that modulate light provided by another source). Among the most obvious examples of active displays are CRTs, PDPs and OLEDs/AMOLEDs. Displays that are typically classified as passive when considering emitted light are LCDs and EP displays. Passive displays, while often exhibiting attractive performance characteristics including, but not limited to, inherently low power consumption, may find somewhat limited use in many practical applications given the lack of an ability to emit light.
WO 2018/213101 A1 discloses a multiview backlight and a multiview display employing active emitters configured to provide a plurality of light beams having different principal angular directions corresponding to different view directions of the multiview display.
US 2014/063213 A1 discloses a method for moving viewing positions of a stereoscopic image display system. Each cylindrical lens is tilted relative to vertical lines.
EP 0606162 A2 discloses that the apparatus resolution of an image displayed on an image display system is increased without increasing the number of actual pixels which are arranged in horizontal rows and vertical columns and is selectively energizable to display an image composed of a plurality of pixel patterns in alternate fields.

### BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:
Figure 1A illustrates a perspective view of a multiview display in an example, according to an embodiment consistent with the principles described herein.
Figure 1B illustrates a graphical representation of the angular components of a light beam having a particular principal angular direction corresponding to a view direction of a multiview display in an example, according to an embodiment consistent with the principles described herein.
Figure 2 illustrates a cross-sectional view of a multiview display in an example, according an embodiment consistent with the principles described herein.
Figure 3 illustrates a detailed view of a portion of an array of light valves of a multiview display in an example, according to an embodiment consistent with the principles described herein.
Figure 4 illustrates a detailed view of a portion of an array of light valves of a multiview display in an example, according to an embodiment consistent with the principles described herein.
Figure 5A illustrates a plan view of a multiview display having a light control film in an example, according to another embodiment consistent with the principle described herein.
Figure 5B illustrates a perspective view of a light control film in an example, according to another embodiment consistent with the principle described herein.
Figure 5C illustrates a side view of a multiview display having a light control film in an example, according to another embodiment consistent with the principle described herein.
Figure 6 illustrates a cross-sectional view of a multiview display comprising a broad-angle backlight in an example, according to an embodiment of the principles described herein.
Figure 7 illustrates a block diagram of a multiview display system in an example, according to an embodiment consistent with the principles herein.
Figure 8 illustrates a flowchart of a method of a multiview display system operation in an example, according to an embodiment consistent with the principles described herein.

Certain examples and embodiments have other features that are one of in addition to and in lieu of the features illustrated in the above-referenced figures. These and other features are detailed below with reference to the above-referenced figures.

### DETAILED DESCRIPTION

Examples and embodiments in accordance with the principles described herein provide backlighting employing an array of light valves having a repeating plurality of color sub-pixels arranged in offset rows. Further, the backlighting includes a light control film (LCF), in various examples and embodiments. In particular, according to various embodiments consistent with the principles herein, a multiview display is provided. The multiview display comprises an array of light valves having a repeating plurality of color sub-pixels and arranged as a plurality of multiview pixels configured to modulate directional light beams as color pixels of views of a multiview image. A first row of the repeating plurality of the color sub-pixels is offset from or shifted with respect to a second row of the repeating plurality of color sub-pixels in the row direction. The offset or shift is configured to mitigate color fringing associated with multiview image. In addition, the multiview display further comprises a light control film (LCF) configured to control a view angle of the multiview image, according to various embodiments.

Herein a `two-dimensional display' or `2D display' is defined as a display configured to provide a view of an image that is substantially the same regardless of a direction from which the image is viewed (i.e., within a predefined viewing angle or range of the 2D display). A conventional liquid crystal display (LCD) found in may smart phones and computer monitors are examples of 2D displays. In contrast and herein, a `multiview display' is defined as an electronic display or display system configured to provide different views of a multiview image in or from different view directions. In particular, the different views may represent different perspective views of a scene or object of the multiview image. Uses of multiview backlighting and multiview displays applicable to the display of multiview images described herein include, but are not limited to, mobile telephones (e.g., smart phones), watches, tablet computes, mobile computers (e.g., laptop computers), personal computers and computer monitors, automobile display consoles, cameras displays, and various other mobile as well as substantially non-mobile display applications and devices.

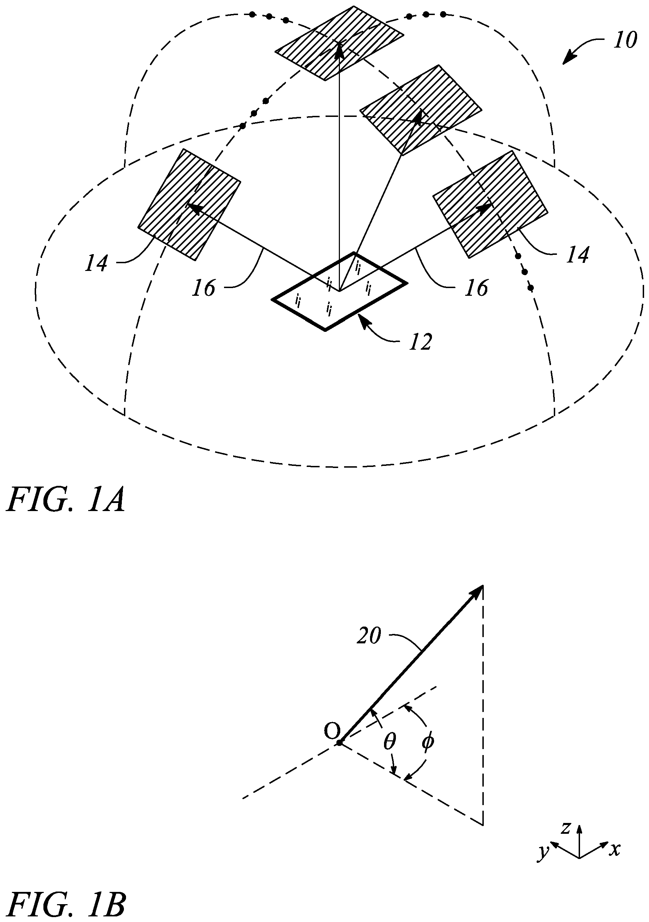

Figure 1A illustrates a perspective view of a multiview display 10 in an example, according to an embodiment consistent with the principles described herein. As illustrated in Figure 1A, the multiview display 10 comprises a screen 12 to display a multiview image to be viewed. The multiview display 10 provides different views 14 of the multiview image in different view directions 16 relative to the screen 12. The view directions 16 are illustrated as arrows extending from the screen 12 in various different principal angular directions; the different views 14 are illustrated as shaded polygonal boxes at the termination of the arrows (i.e., depicting the view directions 16); and only four views 14 and four view directions 16 are illustrated, all by way of example and not limitation. Note that while the different views 14 are illustrated in Figure 1A as being above the screen, the views 14 actually appear on or in a vicinity of the screen 12 when the multiview image is displayed on the multiview display 10. Depicting the views 14 above the screen 12 is only for simplicity of illustration and is meant to represent viewing the multiview display 10 from a respective one of the view directions 16 corresponding to a particular view 14.

A view direction or equivalently a light beam having a direction corresponding to a view direction of a multiview display generally has a principal angular direction given by angular components {θ, ϕ}, by definition herein. The angular component θ is referred to herein as the `elevation component' or `elevation angle' of the light beam. The angular component ϕ is referred to as the `azimuth component' or `azimuth angle' of the light beam. By definition, the elevation angle θ is an angle in a vertical plane (e.g., perpendicular to a plane of the multiview display screen) while the azimuth angle ϕ is an angle in a horizontal plane (e.g., parallel to the multiview display screen plane).

Figure 1B illustrates a graphical representation of the angular components {θ, ϕ} of a light beam 20 having a particular principal angular direction corresponding to a view direction (e.g., view direction 16 in Figure 1A) of a multiview display in an example, according to an embodiment consistent with the principles described herein. In addition, the light beam 20 is emitted or emanates from a particular point, by definition herein. That is, by definition, the light beam 20 has a central ray associated with a particular point of origin within the multiview display. Figure 1B also illustrates the light beam (or view direction) point of origin O.

Further herein, the term 'multiview' as used in the terms `multiview image' and `multiview display' is defined as a plurality of views representing different perspectives or including angular disparity between views of the view plurality. In addition, herein the term 'multiview' explicitly includes more than two different views (i.e., a minimum of three views and generally more than three views), by definition herein. As such, `multiview display' as employed herein is explicitly distinguished from a stereoscopic display that includes only two different views to represent a scene or an image. Note however, while multiview images and multiview displays include more than two views, by definition herein, multiview images may be viewed (e.g., on a multiview display) as a stereoscopic pair of images by selecting only two of the multiview views to view at a time (e.g., one view per eye).

A `multiview pixel' is defined herein as a set of pixels representing 'view' pixels in each of a similar plurality of different views of a multiview display. In particular, a multiview pixel may have an individual pixel or set of pixels corresponding to or representing a view pixel in each of the different views of the multiview image. By definition herein therefore, a `view pixel' is a pixel or set of pixels corresponding to a view in a multiview pixel of a multiview display. In some embodiments, a view pixel may include one or more color sub-pixels. Moreover, the view pixels of the multiview pixel are so-called `directional pixels' in that each of the view pixels is associated with a predetermined view direction of a corresponding one of the different views, by definition herein. Further, according to various examples and embodiments, the different view pixels a multiview pixel may have equivalent or at least substantially similar locations or coordinates in each of the different views. For example, a first multiview pixel may have individual view pixels located at {x1, y1} in each of the different views of a multiview image, while a second multiview pixel may have individual view pixels located at {x2, y2} in each of the different views, and so on.

In some embodiments, a number of view pixels in a multiview pixel may be equal to a number of views of the multiview display. For example, the multiview pixel may provide sixty-four (64) view pixels associated with a multiview display having 64 different views. In another example, the multiview display may provide an eight by four array of views (i.e., 32 views) and the multiview pixel may include thirty-two (32) view pixels (i.e., one for each view). Additionally, each different view pixel may have an associated direction (e.g., light beam principal angular direction) that corresponds to a different one of the view directions corresponding to the 64 different views, for example. Further, according to some embodiments, a number of multiview pixels of the multiview display may be substantially equal to a number of view pixels (i.e., pixels that make up a selected view) in the multiview display views each view of the multiview display. For example, if a view includes six hundred forty by four hundred eighty view pixels (i.e., a 640 x 480 view resolution), the multiview display may have three hundred seven thousand two hundred (307,200) multiview pixels. In another example, when the views include one hundred by one hundred pixels, the multiview display may include a total of ten thousand (i.e., 100 x 100 = 10,000) multiview pixels.

By definition herein, a `multibeam emitter' is a structure or element of a backlight or a display that produces light that includes a plurality of light beams. In some embodiments, the multibeam emitter may be optically coupled to a light guide of a backlight to provide the light beams by coupling out a portion of light guided in the light guide. In such embodiments, a multibeam emitter may comprise a `multibeam element.' In other embodiments, the multibeam emitter may generate light emitted as the light beams (i.e., may comprise a light source). Further, the light beams of the plurality of light beams produced by a multibeam emitter have different principal angular directions from one another, by definition herein. In particular, by definition, a light beam of the plurality has a predetermined principal angular direction that is different from another light beam of the light beam plurality. Furthermore, the light beam plurality may represent a light field. For example, the light beam plurality may be confined to a substantially conical region of space or have a predetermined angular spread that includes the different principal angular directions of the light beams in the light beam plurality. As such, the predetermined angular spread of the light beams in combination (i.e., the light beam plurality) may represent the light field. According to various embodiments, the different principal angular directions of the various light beams are determined by a characteristic including, but not limited to, a size (e.g., length, width, area, etc.) of the multibeam emitter. In some embodiments, the multibeam emitter may be considered an `extended point light source', i.e., a plurality of point light sources distributed across an extent of the multibeam emitter, by definition herein. Further, a light beam produced by the multibeam emitter has a principal angular direction given by angular components {*θ*, *φ*}, by definition herein, and as described above with respect to Figure 1B.

Herein, a `multibeam column' is defined as an elongated structure comprising a plurality of multibeam elements arranged in a line or column. In particular, the multibeam column is made up of multibeam elements of the multibeam element plurality arranged in a line or column. Further, the multibeam column is configured to provide or emit light that includes a plurality of directional light beams, by definition. As such, the multibeam column may be functionally similar to the multibeam element with regard to its light scattering properties. That is, the directional light beams of the plurality of directional light beams produced by a multibeam element of the multibeam column have different principal angular directions from one another, by definition herein. In some embodiments, the multibeam column may be a narrow elongated structure that substantially extends across a width of a backlight or similar component of a multiview display. In particular, the multibeam column may be made up of a plurality of discrete multibeam elements arranged in a line that extends across the backlight width, for example. An exception to the definition above is that, the multibeam column comprises a single, continuous diffraction grating structure instead of individual discrete multibeam elements, in some embodiments. In the exception, a section of the continuous diffraction grating effectively functions in a manner that is substantially similar to the discrete multibeam element of the multibeam column described above.

According to various embodiments, a width of the multibeam column may be defined by a size of a multibeam element of the multibeam element plurality of the multibeam column. Thus, the width of the multibeam column may be comparable to a width of a light valve used in a multiview display that is associated with the multibeam column. Further, the multibeam column width may be between about one half and about two times the light valve size, in some embodiments.

Herein, an `active emitter' or equivalently an 'active optical emitter' is defined as an optical emitter configured to produce or emit light when activated or turned on. An active emitter does not receive light from another source of light. Instead, the active emitter generates its own light when activated. An active emitter may comprise a light emitting diode (LED), a micro light emitting diode (µLED), or an organic light emitting diode (OLED), in some examples. The light produced by the active emitter may have a color (i.e., may include a particular wavelength of light), or may be a range of wavelengths (e.g., white light). By definition herein, a `color emitter' is an active emitter that provides light having a color. In some embodiments, an active emitter may comprise a plurality of optical emitters. In some embodiments, at least one optical emitter in the active optical emitter may generate light having a color, or equivalently a wavelength, that differs from a color or wavelength of light produced by at least one other optical emitter of the plurality.

Herein, a `light guide' is defined as a structure that guides light within the structure using total internal reflection. In particular, the light guide may include a core that is substantially transparent at an operational wavelength of the light guide. The term `light guide' generally refers to a dielectric optical waveguide that employs total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some embodiments, the light guide may include a coating in addition to or instead of the aforementioned refractive index difference to further facilitate the total internal reflection. The coating may be a reflective coating, for example. The light guide may be any of several light guides including, but not limited to, one or both of a plate or slab guide and a strip guide.

By definition, 'broad-angle' emitted light is defined as light having a cone angle that is greater than a cone angle of the view of a multiview image or multiview display. In particular, in some embodiments, the broad-angle emitted light may have a cone angle that is greater than about twenty degrees (e.g., > ± 20°). In other embodiments, the broad-angle emitted light cone angle may be greater than about thirty degrees (e.g., > ± 30°), or greater than about forty degrees (e.g., > ± 40°), or greater than about fifty degrees (e.g., > ± 50°). For example, the cone angle of the broad-angle emitted light may be greater than about sixty degrees (e.g., > ± 60°).

In some embodiments, the broad-angle emitted light cone angle may be defined to be about the same as a viewing angle of an LCD computer monitor, an LCD tablet, an LCD television, or a similar digital display device meant for broad-angle viewing (e.g., about ± 40-65°). In other embodiments, broad-angle emitted light may also be characterized or described as diffuse light, substantially diffuse light, non-directional light (i.e., lacking any specific or defined directionality), or as light having a single or substantially uniform direction.

Herein, a 'light source' is defined as a source of light (e.g., an optical emitter configured to produce and emit light). For example, the light source may comprise an optical emitter such as a light emitting diode (LED) that emits light when activated or turned on. In particular, herein the light source may be substantially any source of light or comprise substantially any optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by the light source may have a color (i.e., may include a particular wavelength of light), or may be a range of wavelengths (e.g., white light). In some embodiments, the light source may comprise a plurality of optical emitters. For example, the light source may include a set or group of optical emitters in which at least one of the optical emitters produces light having a color, or equivalently a wavelength, that differs from a color or wavelength of light produced by at least one other optical emitter of the set or group. The different colors may include primary colors (e.g., red, green, blue) for example.

Further, as used herein, the article 'a' is intended to have its ordinary meaning in the patent arts, namely 'one or more'. For example, `a color sub-pixel' means one or more color sub-pixels and as such, 'the color sub-pixel' means `color sub-pixel(s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the term 'substantially' as used herein means a majority, or almost all, or all, or an amount within a range of about 51% to about 100%. Moreover, examples herein are intended to be illustrative only and are presented for discussion purposes and not by way of limitation.

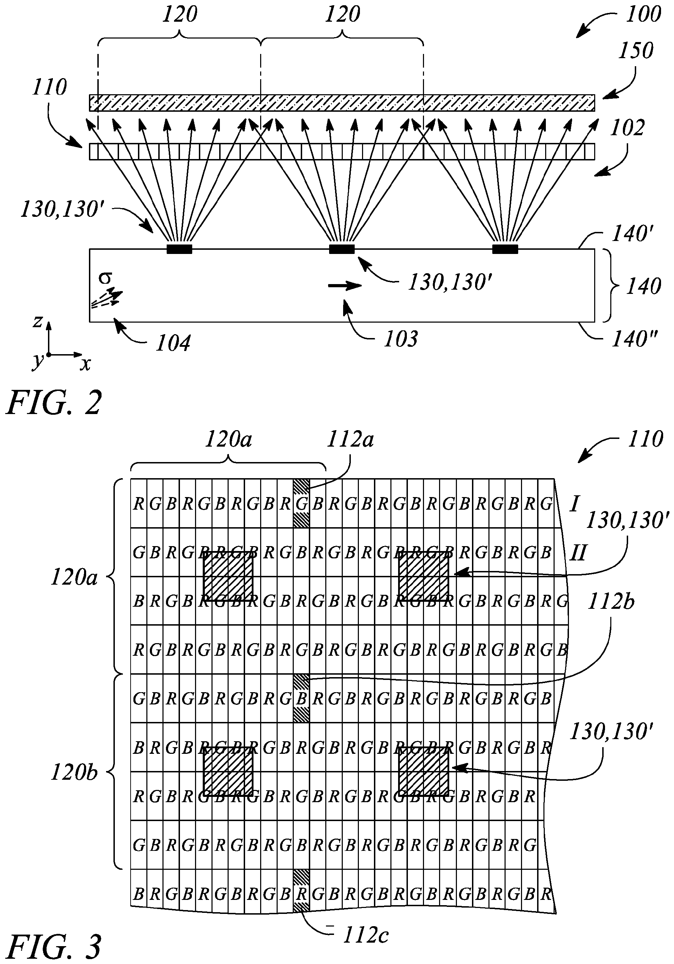

According to some embodiments of the principles described herein, a multiview display is provided. Figure 2 illustrates a cross-sectional view of a multiview display 100 in an example, according to an embodiment consistent with the principles described herein.

The multiview display 100 comprises an array of light valves 110. In various embodiments, different types of light valves may be employed as the light valves 110 of the light valve array including, but not limited to, one or more of liquid crystal light valves, electrophoretic light valves, and light valves based on electrowetting. The array of light valves 110 comprises a repeating plurality of color sub-pixels 112 configured to modulate directional light beams as color pixels of views of a multiview image.

Figure 3 illustrates a detailed view of a portion of an array of light valves 110 of a multiview display 100 in an example, according to an embodiment consistent with the principles described herein. The array of light valves 110 comprises a repeating plurality of color sub-pixels 112. In some embodiments, each color sub-pixel 112 of the repeating plurality of color sub-pixels has a different color. In the embodiment illustrated, the repeating plurality of color sub-pixels 112 consists of a repeating set of red, blue, and green color sub-pixels (RGB) in this order along a row of the array of light valves 110 (each color of a color sub-pixel of the repeating plurality of color sub-pixels is denoted with a corresponding initial in the figure). In other embodiments, the repeating plurality of color sub-pixels 112 may comprise a repeating set of red, blue, green, and yellow color sub-pixels (RGBY). In yet another embodiment, the repeating set may include red, blue, green, and white pixels (RGBW).

As illustrated on Figure 3, the repeating plurality of color sub-pixels is arranged as a plurality of multiview pixels 120 of the multiview display 100. Each multiview pixel 120 of the plurality of multiview pixels comprises a different subset of the repeating plurality of color sub-pixels 112. Each multiview pixel 120 is configured to modulate directional light beams as color pixels of views of the multiview display 100. The modulated light beams represent the respective different colors of the color sub-pixels 112 of the plurality within the color pixels of the multiview display 100. In the embodiment illustrated, the multiview display 100 is a 4 x 4 display (i.e., offers 16 views in full parallax mode). Accordingly, each multiview pixel 120 of the plurality provides sixteen color view pixels corresponding to sixteen color pixels of sixteen different views of the multiview image. Each color view pixel comprises a set of three consecutive color sub-pixels 112 including a red color sub-pixel 112, a green color sub-pixel 112, and a blue color sub-pixel 112. The plurality of multiview pixels 120 may be arranged in rows and columns of multiview pixels 120.

A first row of the repeating plurality of color sub-pixels 112 is offset from or shifted with respect to a second row of the repeating plurality of color sub-pixels 112. Figure 3 illustrates a first row *I* of the repeating plurality of color sub-pixels 112 being offset from a second row *II* of the repeating plurality of color sub-pixels 112. The first row *I*and the second row *II* are offset in the row direction, such that within a column of the color sub-pixels 112, a color sub-pixel 112 of the first row *I* has a different color from a color sub-pixel 112 of the second row *II.* In the embodiment illustrated, the first row *I* and the second row *II* are adjacent. Further, the offset (or equivalently, the offset distance) between the first row *I* and the second row *II* of the repeating plurality of color sub-pixels 112 is equal to an integer multiple of a width of a color sub-pixel 112. In the embodiment illustrated in Figure 3, the first row *I* of the repeating plurality of color sub-pixels 112 is offset or shifted from the second row *II* of the repeating plurality of color sub-pixels 112 by a distance of one width of a color sub-pixel 112 in the direction of the repeating plurality of color sub-pixels 112. In other embodiments, the offset distance or shift distance between the first row *I*and the second row *II* may amount to two widths of a color sub-pixel 112, for example.

The offset or shift between the first row *I* and the second row *II* is configured to provide corresponding color sub-pixels 112 in adjacent multiview pixels 120 with or having different colors. Figure 3 illustrates the corresponding color sub-pixels 112 in a set of adjacent multiview pixels 120a, 120b having different colors as a result of the offset between the first row *I* and the second row *II* of the repeating plurality of color sub-pixels 112. For example, a first color sub-pixel 112a of the illustrated multiview pixel 120a may have a green color, which differs from a blue color of a corresponding color sub-pixel 112b of an adjacent multiview pixels 120b due to the offset. Similarly, the offset results in corresponding color sub-pixels 112b, 112c having different colors, i.e., blue and red, respectively. The different colors of the corresponding colors sub-pixels 112, provided by the offset of rows in adjacent multiview pixels may serve to mitigate color fringing associated with the color pixel of the multiview display 100, according to some embodiments.

In some embodiments (e.g., as illustrated in Figures 2 and 3), the multiview display 100 may further comprises an array of multibeam emitters 130. The multibeam emitters 130 are configured to provide the directional light beams modulated by the plurality of color sub-pixels 112. The directional light beams may have principal angular directions corresponding to respective different view directions of the multiview display 100. In particular, Figure 2 illustrates the directional light beams 102 as a plurality of diverging arrows depicted as being directed away from the multibeam emitters 130 of the multibeam emitter array.

In some embodiments, the multibeam emitters 130 of the array may be located at or adjacent to a first (top) surface of a substrate that supports the multibeam emitters 130 or equivalently a `multibeam backlight,' as illustrated in Figure 2. In other embodiments (not illustrated), the plurality of multibeam emitters 130 may be located on a second (or bottom) surface of the multibeam backlight, opposite to the first surface. In yet other embodiments (not illustrated), the multibeam emitters 130 of the multibeam emitter array may be located inside the multibeam backlight between the first surface and the second surface.

In some embodiments, a size of the multibeam emitter 130 is comparable to a size of a light valve 110 of the multiview display 100. Herein, the 'size' may be defined in any of a variety of manners to include, but not be limited to, a length, a width or an area. For example, the size of a light valve 110 may be a length thereof and the comparable size of the multibeam emitter 130 may also be a length of the multibeam emitter 130. In another example, size may refer to an area such that an area of the multibeam emitter 130 may be comparable to an area of the light valve 110. In some embodiments, the size of the multibeam emitter is comparable to the light valve size such that the multibeam emitter size is between about fifty percent (50%) and about two hundred percent (200%) of the light valve size.

As illustrated in Figures 2 and 3, different subsets of color sub-pixels 112 of the repeating plurality of color sub-pixels 112 of the array of light valves 110 correspond to different multibeam emitter 130 of the multibeam emitter array. Further, each of the different subsets of color sub-pixels 112 may represent a multiview pixel 120 of the multiview display 100, as illustrated. As such, a relationship between the multibeam emitters 130 of the multibeam emitter array and corresponding multiview pixels 120 (e.g., sets of light valves 110) may be a one-to-one relationship, in some embodiments. That is, there may be an equal number of multiview pixels 120 and multibeam emitters 130. Figures 2 and 3 illustrate by way of example and not limitation a one-to-one relationship where each multiview pixel 120 comprising a different set of light valves 110 is illustrated as surrounded by a thicker line.

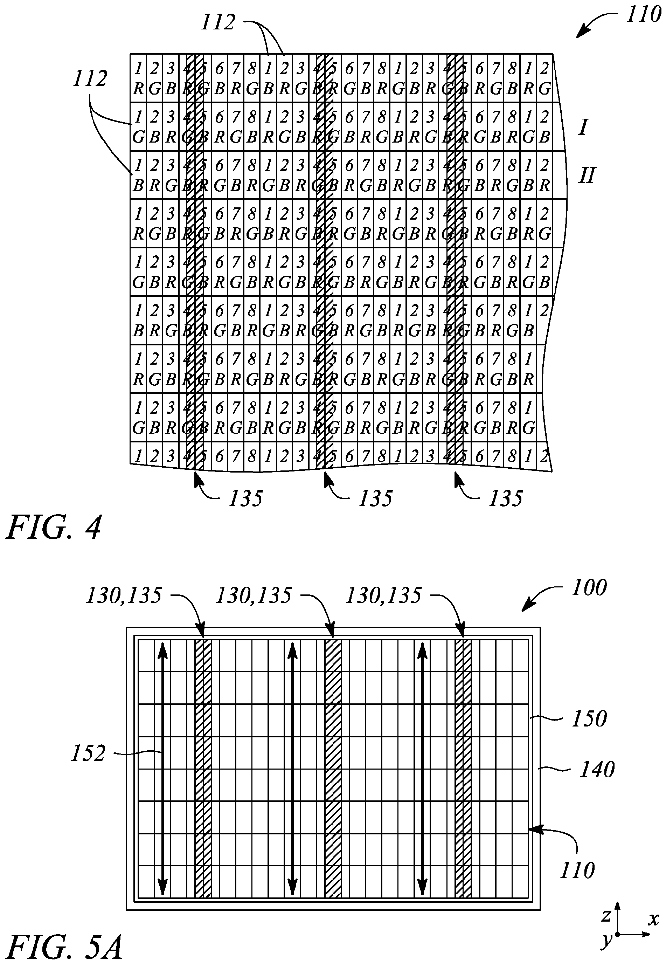

Figure 4 illustrates a plan view of another multiview display 100 in an example, according to an embodiment consistent with the principles described herein. The multiview display 100 illustrated may represent a horizontal parallax multiview display. For example, as illustrated multiview display 100 may be an 8 x 1 horizontal parallax multiview display. In the illustrated embodiment, the multiview display 100 as a horizontal parallax multiview display comprises a plurality of multibeam columns 135 spaced apart along a length of the multiview display 100. A multibeam column 135 of the plurality of multibeam columns is configured to provide the directional light beams in a horizontal-only directional pattern. The directional light beams provided by the plurality of multibeam columns 135 are modulated by array of light valves 110 having offset rows of the repeating plurality of color sub-pixels 112, e.g., as described above. The directional light beams may have principal angular directions corresponding to respective different view directions of the multiview display 100, views corresponding to the different view directions being arranged in a horizontal-only arrangement corresponding to the horizontal-only directional pattern.

In Figure 4, a first row *I* of the repeating plurality of color sub-pixels 112 of the multiview display 100 is offset or shifted from a second row *II* of the repeating plurality of color sub-pixels 112. Further, the first row *I* and the second row *II* are offset in the row direction, such that within a column of the color sub-pixels 112, a color sub-pixel 112 of the first row *I* has a different color from a color sub-pixel 112 of the second row *II.* According to various embodiments, an offset distance or shift distance between rows may be equal to an integer multiple of a width of a color sub-pixel 112, e.g., a width of a single color sub-pixel 112. The offset distance may result in the color sub-pixels 112 of the repeating plurality of color sub-pixels 112 to be arranged in parallel slanted vertical stripes for each color of the plurality. Color sub-pixels 112 are labeled according to colors R, G, B, corresponding to an RGB color model, while color sub-pixels 112 corresponding to the eight views are numbered (i.e., 1, 2, 3, 4, 5, 6, 7, 8) in Figure 4.

As with the embodiments of Figures 2 and 3, this arrangement of color sub-pixels 112 as slanted vertical stripes illustrated in Figure 4 may serve to mitigate color fringing associated with the color pixel of the multiview display 100, in some embodiments. Further, the slanted stripes arrangement of color sub-pixels 112 may prevent a view shift in the horizontal direction when the head of the viewer moves in the vertical direction or along the multibeam columns.

In some embodiments, the plurality of multibeam columns 135 is the array of multibeam emitters 130. That is, a multibeam column 135 of the multibeam column plurality may comprise a plurality of multibeam emitters 130 of the array of multibeam emitters arranged in a column. Further, the multibeam emitters 130 of each multibeam column 135 may be separated by a distance that is less than a width of a size of a multibeam emitter 130, in some embodiments. In some embodiments, multibeam emitters 130 of a multibeam column 135 may be separated by a distance comparable to a distance separating adjacent light valves 110 of the array of light valves. In some embodiments, the multibeam column 135 may comprise a continuous multibeam emitter 130 or a single elongated multibeam emitter 130.

Referring back to Figure 2, in some embodiments, the multiview display 100 further comprises a light guide 140. The light guide 140 is configured to guide light along a length of the light guide as guided light 104 (i.e., a guided light beam 104). For example, the light guide 140 may include a dielectric material configured as an optical waveguide. The dielectric material may have a first refractive index that is greater than a second refractive index of a medium surrounding the dielectric optical waveguide. The difference in refractive indices is configured to facilitate total internal reflection of the guided light 104 according to one or more guided modes of the light guide 140, for example.

The light guide 140 may be a slab or plate of an optical waveguide (i.e., a plate light guide) comprising an extended, substantially planar sheet of optically transparent, dielectric material. The substantially planar sheet of dielectric material is configured to guide the guided light 104 using total internal reflection. According to various examples, the optically transparent material of the light guide 140 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or `acrylic glass', polycarbonate, etc.). In some examples, the light guide 140 may further include a cladding layer (not illustrated) on at least a portion of a surface (e.g., one or both of the first surface and the second surface) of the light guide 140. The cladding layer may be used to further facilitate total internal reflection, according to some examples.

According to various embodiments, the light guide 140 is configured to guide the guided light 104 according to total internal reflection at a non-zero propagation angle between a first surface 140' (e.g., front or top surface or side) and a second surface 140" (e.g., back or bottom surface or side) of the light guide 140. In particular, the guided light 104 propagates by reflecting or 'bouncing' between the first surface 140' and the second surface 140" of the light guide 140 at the non-zero propagation angle. In some embodiments, a plurality of guided light beams 104 comprising different colors of light may be guided by the light guide 140 at respective ones of different color-specific, non-zero propagation angles. Note, the non-zero propagation angle is not illustrated in Figure 2 for simplicity of illustration. However, a bold arrow depicting a propagation direction 103 illustrates a general propagation direction of the guided light 104 along the light guide length in Figure 2.

According to some embodiments, the multibeam emitter 130 may comprise a multibeam element 130'. In particular, the multiview display 100 that includes the light guide 140 may further comprise an array of multibeam elements 130' corresponding to the array of multibeam emitters 130. As such, the multibeam element array is the multibeam emitter array, each multibeam element 130' of the multibeam element array may correspond to a different multibeam emitter 130 of the multibeam emitter array, in some embodiments. According to various embodiments, the multibeam elements 130' of the array are spaced apart from one another along a length of the light guide 140. The multibeam elements 130' of the array may be located at or adjacent to the first (or 'top') surface 140' of the light guide 140, for example as illustrated in Figure 2. In other embodiments, the multibeam elements 130' of the array may be located on the second (or 'bottom') surface 140" of the light guide 140 or inside the light guide 140 between the first and second surfaces 140', 140".

According to various embodiments, the multibeam element 130' of the multibeam element array is configured to scatter out light from the light guide 140 as the plurality of directional light beams having principal angular directions corresponding to view directions of different views the multiview image or equivalently of the multiview display 100. According to various embodiments, the multibeam element 130' may comprise any of a number of different structures configured to scatter out a portion of the guided light 104 as directional light beams. For example, the different structures may include, but are not limited to, diffraction gratings, micro-reflective elements, micro-refractive elements, or various combinations thereof. In some embodiments, the multibeam element 130' comprising a diffraction grating is configured to diffractively scatter out the guided light portion as the plurality of directional light beams having the different principal angular directions. In other embodiments, the multibeam element 130' comprising a micro-reflective element is configured to reflectively scatter out the guided light portion as the plurality of directional light beams, or the multibeam element 130' comprising a micro-refractive element is configured to scatter out the guided light portion as the plurality of directional light beams by or using refraction (i.e., refractively scatter out the guided light portion).

In other embodiments (not illustrated), the multibeam emitters 130 may comprise an active optical emitter such as, but not limited to, a light emitting diode (LED), a micro light emitting diode (µLED) and a micro organic light emitting diode (µOLED). In these embodiments, the light guide 140 and a light source configured to provide light to be guided as the guided light within the light guide 140 may be omitted. Instead, the light guide 140 may be replaced by a substrate to support and provide power to the multibeam emitters 130, as mentioned above.

Referring again to Figure 2, the multiview display 100 further comprises a light control film 150. According to various embodiments, the light control film 150 is configured to control a view angle of the multiview image. In some embodiments, the light control film 150 is configured to control a view angle of the multiview image in a direction orthogonal to a horizontal direction of the multiview display 100. In particular, a light control axis of the light control film 150 may be aligned with or parallel to columns of multibeam emitters 130 (e.g., parallel to multibeam columns 135 or columns of multibeam elements 130'). In these embodiments, the light control film 150 may have little or no effect on the view angle of the multiview image in a direction corresponding to the horizontal direction.

Figure 5A illustrates a plan view of a multiview display 100 having a light control film 150 in an example, according to an embodiment consistent with the principle described herein. As illustrated, the light control axis 152 of the light control film 150 is aligned with (i.e., substantially parallel to) the multibeam columns 135 comprising the multibeam emitters 130, by way of example and not limitation. As illustrated, the light control axis 152 is also parallel to or aligned with columns of light valves 110 (e.g., columns of color sub-pixels) of the array of light valves 110. In some embodiments, the light control film 150 may be located between the array of light valves 110 and a surface (e.g., the first surface 140') of the light guide 140, e.g., as illustrated in Figure 5A. In other embodiments, the array of light valves 110 may be located between the light guide 140 and the light control film 150, e.g., as illustrated in Figure 2, by way of example and not limitation.

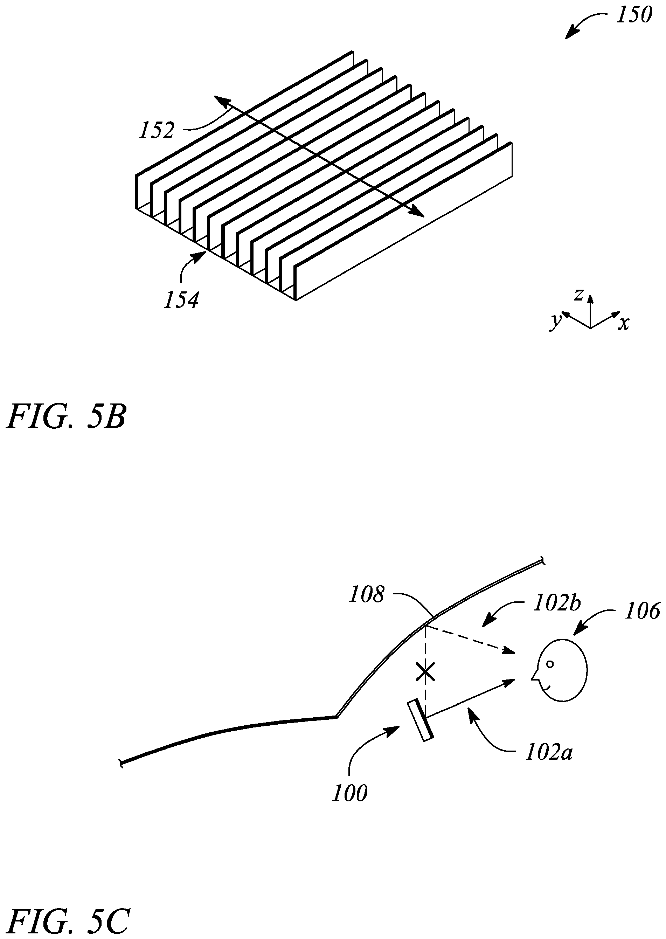

According to various embodiments, the light control film 150 may comprise any of a variety of light control films, privacy filters, and similar privacy films. Figure 5B illustrates a perspective view of a light control film 150 in an example, according to another embodiment consistent with the principle described herein. As illustrated, the light control film 150 comprises a plurality of parallel micro-louvers or micro-baffles 154 which are configured to be opaque to light passing through the light control film 150. In between the parallel micro-baffles 154, the light control film 150 is substantially transparent to light. The parallel micro-baffles 154 provide a maximum amount of angular control in a direction perpendicular a length direction of the parallel micro-baffles 154. As such and by definition, the light control axis 152 is perpendicular to the length direction of the parallel micro-baffles 154, as illustrated. Examples of light control films that may be used as the light control film 150 include, but are not limited, various view control films (VC-films) manufactured by Shin-Etsu Polymers Europe B.V. that comprise an optical louver film of alternating optical clear silicon rubber and black silicon rubber layer, e.g., see www.shinetsu.info/vc_film. In another non-limiting example, the light control film 150 may comprise an advanced light control film (e.g., ALCF-P or ALCF-A) manufactured by 3M Display Materials & Systems Division, St. Paul, MN.

According to various embodiments, the light control film 150 may be configured minimize or limit an angular visibility or view angle of the multiview image in a direction of the light control axis 152. As such, multiview display 100 having the light control film 150 may be employed in situations where reflection may pose a problem. Figure 5C illustrates a side view of a multiview display 100 having a light control film 150 in an example, according to another embodiment consistent with the principle described herein. As illustrated, the multiview display 100 is mounted in an instrument panel of an automobile. A driver 106 may readily view the multiview image in a direction 102a toward the multiview display 100 (e.g., a plane of horizontal parallax when the multiview display 100 is configured as a horizontal parallax-only display). On the other hand, the light control film 150 may essentially block a view of the multiview display 100 that reflects off of a windshield 108 of the automobile, as illustrated by view direction 102b.

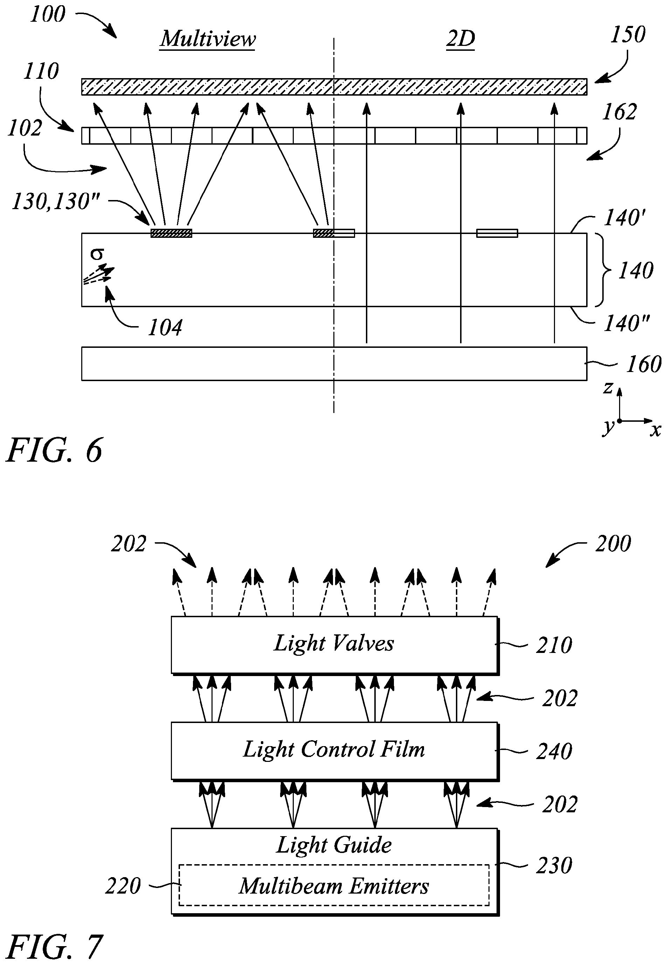

In some embodiments, the multiview display 100 further comprises a broad-angle backlight 160 adjacent to the light guide 140. Figure 6 illustrates a cross-sectional view of a multiview display 100 comprising a broad-angle backlight 160 in an example, according to an embodiment of the principles described herein. According to various embodiments, the broad-angle backlight 160 is opposite to a side of the light guide 140 adjacent to the light valve array. In particular, as illustrated, the broad-angle backlight 160 is adjacent to a bottom surface (i.e., the second surface 140") of the light guide 140. The broad-angle backlight 160 is configured to provide broad-angle light 162 as broad-angle emitted light. Also illustrated in Figure 6 are the array of light valves 110 and the light control film 150.

According to some embodiments, the light guide 140 and the array of multibeam emitters or elements 130, 130' may be configured to be optically transparent to light propagating substantially perpendicular to a surface of the light guide 140 (e.g., the first and second surfaces 140', 140") to facilitate passage of the light through a thickness of the light guide 140. In particular, as illustrated in Figure 6, the light guide 140 and the array of multibeam emitters or elements 130, 130' may be configured to be optically transparent to the broad-angle light 162 emitted from the adjacent broad-angle backlight 160. Thus, broad-angle light 162 may be emitted from the broad-angle backlight 160 and through the thickness of light guide 140. Therefore, the broad-angle light 162 from the broad-angle backlight 160 may be received through the bottom or second surface 140" of the light guide 140, transmitted through a thickness of the light guide 140, and emitted from a top surface (i.e., the first surface 140') of the light guide 140 toward the array of light valves 110. Because the light guide 140 is optically transparent to the broad-angle light 162, the broad-angle light 162 is not substantially affected by the light guide 140.

According to various embodiments, the multiview display 100 illustrated in Figure 6 may selectively operate in a two-dimensional (2D) mode or a multiview mode. In the 2D mode, the multiview display 100 is configured to emit the broad-angle light 162 provided by the broad-angle backlight 160. In the multiview mode, the multiview display 100 is configured to emit the directional light beams 102 provided by the light guide 140, as previously described. The combination of the light guide 140 and broad-angle backlight 160 may be used in dual (2D/3D) display, for example.

In accordance with some embodiments of the principles described herein, a multiview display 200 is provided. Figure 7 illustrates a block diagram of a multiview display 200 in an example, according to an embodiment consistent with the principles herein. The multiview display 200 comprises an array of light valves 210 having a repeating plurality of color sub-pixels arranged in offset rows. Light valves 210 of the light valve array are arranged as multiview pixels configured to modulate directional light beams as color pixels of a multiview image, according to various embodiments. In some embodiments, the light valves 210 of the array may be substantially similar to the light valves 110 of the multiview display 100, previously described. As such, different types of light valves may be employed as the light valves 110 of the light valve array including, but not limited to, one or more of liquid crystal light valves, electrophoretic light valves, and light valves based on electrowetting. In some embodiments, each color sub-pixel of the repeating plurality of color sub-pixels has a different color. For example, the repeating plurality of color sub-pixels may consist of a repeating set of red, blue, and green color sub-pixels (RGB) in this order along a row of the array of light valves 210. In other embodiments, the repeating plurality of color sub-pixels may comprise a repeating set of red, blue, green, and yellow color sub-pixels (RGBY). In yet another embodiment, the repeating set may include red, blue, green, and white pixels (RGBW).

The multiview display 200 further comprises an array of multibeam emitters 220 configured to illuminate different multiview pixels with different sets of directional light beams. In some embodiments, there may be a one-to-one relationship between a multibeam emitter 220 of the array of multibeam emitters 220 and a multiview pixel of the light valve array. The multibeam emitters 220 of the array may be substantially similar to the multibeam emitters 130 of the above-described multiview display 100, according to some embodiments. For example, the multibeam emitters 220 of the plurality are configured provide the directional light beams to be modulated by the array of light valves 210. According to various embodiments, the directional light beams have principal angular directions corresponding to respective different view directions of the multiview display 200. Further, the multibeam emitters 220 of the plurality may be located on a surface of or within a substrate used to support the multibeam emitters 220 (e.g., a light guide described below).

According to various embodiments, adjacent rows of the plurality of color sub-pixels are offset from one another by an integer multiple of a width of a color sub-pixel in or along a row direction. The offset or shift between the adjacent rows is configured to provide a color sub-pixel of a first multiview pixel having a different color than a corresponding color sub-pixel of a second multiview pixel, according to various embodiments. In some embodiments, the offset rows may be substantially similar to the rows having an offset between the first row of the array of color sub-pixels and the second row of the array of color sub-pixels, described above with respect to the multiview display 100. Further, according to the offset of adj acent offset rows of the plurality of color sub-pixels being an integer multiple of a width of a color sub-pixel, the adjacent rows may be offset or shifted by a distance of a width of a color sub-pixel (e.g., as illustrated in Figures 3 and 4 in reference to the multiview display 100) or two widths of a color sub-pixel, or three widths of a color sub-pixels, and so on.

In some embodiments, a multibeam emitter 220 of the multibeam emitter array comprises an active optical emitter. The active optical emitter is configured to emit light as the directional light beams. The directional light beams emitted by the active optical emitter have principal angular directions corresponding to the respective different view directions of the multiview display 200. The active optical emitter may comprise any number of different structures configured to emit light as a plurality of directional light beams. In some embodiments, the active optical emitter comprises, but is not limited to, a micro light emitting diode (µLED) or an organic light emitting diode (OLED). In some embodiments, the active optical emitter is configured to emit white light, while in other embodiments the active optical emitter may emit light comprising a particular color (e.g., may be a monochromatic active optical emitter).

Further, a size of the active optical emitter is comparable to a size of a light valve 210 of the light valve array. Herein, the 'size' may be defined in any of a variety of manners to include, but not be limited to, a length, a width or an area. For example, the size of a light valve 210 of the light valve array may be a length thereof and the comparable size of the active optical emitter may also be a length of the active optical emitter. In another example, size may refer to an area such that an area of the active optical emitter may be comparable to an area of the light valve 210 of the light valve array.

In other embodiments, the multibeam emitter 220 of the multibeam emitter array may be substantially passive. In particular, in some embodiments (e.g., as illustrated in Figure 7), the multiview display 200 further comprises a light guide 230. The light guide 230 is configured to guide light in a propagation direction along a length of the light guide as guided light. In some embodiments, the light guide 230 may be substantially similar to the light guide 140 of the multiview display 100, previously described. According to various embodiments, the light guide 230 is configured to guide the guided light using total internal reflection. Further, the guided light may be guided at a non-zero propagation angle by or within the light guide 230. In some embodiments, the guided light may be collimated or may be a collimated light beam. In particular, the guided light may be collimated according to or having a collimation factor σ, in various embodiments.

In some embodiments (e.g., when the multibeam emitters 220 are passive), the multiview display 200 may further comprise an array of multibeam elements spaced apart from one another along the light guide length. The multibeam element is configured to scatter out a portion of the guided light within the light guide 230 as the directional light beams. Further, a multibeam element of the multibeam element array may correspond to a multibeam emitter of the multibeam emitter array, according to these embodiments. In some embodiments, a multibeam element of the array of multibeam elements may be substantially similar to the multibeam element 130' of the multiview display 100, described above. As such, the multibeam element is configured to illuminate different multiview pixels with different sets of the directional light beams. In particular, there may be a one-to-one relationship between a multibeam element of the array of multibeam elements and a multiview pixel of the array of multiview pixels. The multibeam element may be located on surface of or within the light guide 230.

In some embodiments, a size of the multibeam element is comparable to a size of a light valve 210 of the light valve array. In some embodiments, the size of the multibeam element is comparable to the light valve size such that the multibeam element size is between about fifty percent (50%) and about two hundred percent (200%) of the light valve size.

In some embodiments, the multibeam element may comprise any of a number of different structures configured to scatter out a portion of the guided light. For example, the different structures may include, but are not limited to, diffraction gratings, micro-reflective elements, micro-refractive elements, or various combinations thereof. In some embodiments, the multibeam element comprising a diffraction grating is configured to diffractively scatter out the guided light portion as the plurality of directional light beams having the different principal angular directions. In other embodiments, the multibeam element comprising a micro-reflective element is configured to reflectively scatter out the guided light portion as the plurality of directional light beams, or the multibeam element comprising a micro-refractive element is configured to scatter out the guided light portion as the plurality of directional light beams by or using refraction (i.e., refractively scatter out the guided light portion).

The multiview display 200 illustrated in Figure 7 further comprises a light control film 240 configured to control a view angle of the multiview image. According to some embodiments, the light control film 240 may be substantially similar to the light control film 150 described above with respect to the multiview display 100. In particular, the light control film 240 has a light control axis aligned with a column of multibeam emitters 220, in some embodiments. That is, the light control axis of the light control film 240 may be parallel to the multibeam emitter columns of the multiview display 200. The light control axis may also be aligned with columns of light valves 210 in the light valve array. In some embodiments, the array of light valves 210 is between the light control film 240 and the light guide 230 having the multibeam emitters 222, as illustrated in Figure 7. In other embodiments not explicitly illustrated with respect to the multiview display 200, the light control film 240 may be located between the array of light valves 210 and the light guide 230.

In some embodiments (not illustrated), the multiview display 200 may further comprise a light source. According to various embodiments, the light source is configured to provide the light to be guided within light guide 230. In particular, the light source may be located adjacent to an entrance surface or end (input end) of the light guide 230. In various embodiments, the light source may comprise substantially any source of light (e.g., optical emitter) including, but not limited to, one or more light emitting diodes (LEDs) or a laser (e.g., laser diode). In some embodiments, the light source may comprise an optical emitter configured produce a substantially monochromatic light having a narrowband spectrum denoted by a particular color. In particular, the color of the monochromatic light may be a primary color of a particular color space or color model (e.g., a red-green-blue (RGB) color model). In other examples, the light source may be a substantially broadband light source configured to provide substantially broadband or polychromatic light. For example, the light source may provide white light. In some embodiments, the light source may comprise a plurality of different optical emitters configured to provide different colors of light. The different optical emitters may be configured to provide light having different, color-specific, non-zero propagation angles of the guided light corresponding to each of the different colors of light.

In some embodiments, the guided light may be collimated or equivalently may be a collimated light beam (e.g., provided by a collimator, as described below). Herein, a `collimated light' or `collimated light beam' is generally defined as a beam of light in which rays of the light beam are substantially confined to a predetermined or defined angular spread within the light beam (e.g., the guided light). Further, rays of light that diverge or are scattered from the collimated light beam are not considered to be part of the collimated light beam, by definition herein. Moreover, the guided light may be collimated according to or having a collimation factor σ, in various embodiments.

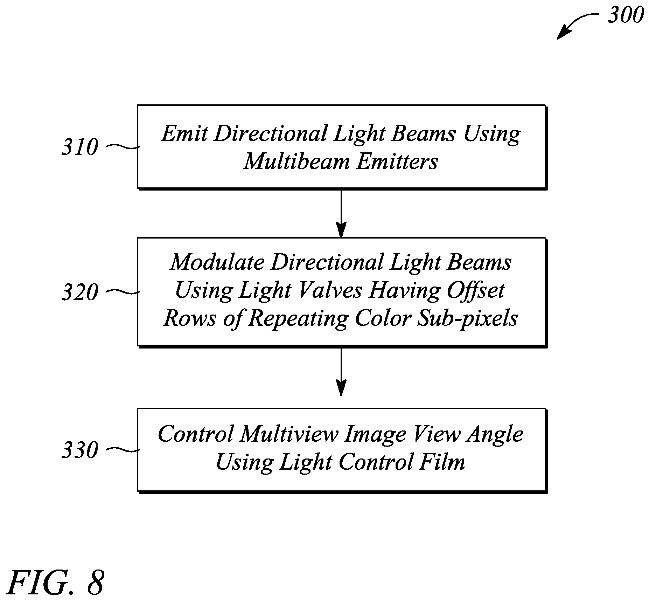

According to some embodiments of the principles described herein, a method of multiview display operation is provided. Figure 8 illustrates a flow chart of the method 300 of multiview display operation, according to an embodiment consistent with the principles described herein. As illustrated, the method 300 of multiview display operation comprises emitting 310 directional light beams using an array of multibeam emitters. In some embodiments, the multibeam emitters of the array may be substantially similar to the multibeam emitters 130 of the multiview display 100, previously described. In particular, the multibeam emitters of the multibeam emitter array may be arranged in rows and columns of multibeam emitters. The directional light beams have directions corresponding to different views directions of the multiview display.

The method 300 of multiview display operation further comprises modulating 320 the directional light beams using an array of light valves. The array of light valves comprises a repeating plurality of color sub-pixels arranged as a plurality of multiview pixels and the modulated directional light beams provide color pixels of different views of a multiview image displayed by the multiview display. According to some embodiments, the array of light valves may be substantially similar to the array of light valves 110 of the above-described multiview display 100. As such, different types of light valves may be employed as the light valves of the light valve array including, but not limited to, one or more of liquid crystal light valves, electrophoretic light valves, and light valves based on electrowetting.

In some embodiments, each color sub-pixel of the repeating plurality of color sub-pixels has a different color. For example, the repeating plurality of color sub-pixels may consist of a repeating set of red, blue, and green color sub-pixels (RGB) in this order along a row of the array of light valves, as illustrated in Figures 3 and 4 for the multiview display 100. In other embodiments, the repeating plurality of color sub-pixels may comprise a repeating set of red, blue, green, and yellow color sub-pixels (RGBY). In yet another embodiment, the repeating set may include red, blue, green, and white pixels (RGBW). The color sub-pixels of the repeating plurality of color sub-pixels are arranged along rows of the light valve array. Further, multibeam emitters of the multibeam emitter array are arranged in rows having a row direction corresponding to row direction of the rows of the light valve array.

According to various embodiments, rows of the repeating plurality of color sub-pixels of the light valve array are offset or shifted from one another. In particular, a first row of the repeating plurality of color sub-pixels is offset from a second row of the repeating plurality of color sub-pixels to provide corresponding color sub-pixels in adjacent multiview pixels with different colors. The offset of the rows is configured to mitigate color fringing associated with the color pixel of a multiview image being displayed by the multiview display. In some embodiments, the offset between the first and a second row may be substantially similar to the offset between the first and the second row as described in relation to the multiview display 100. For example, the offset or shift between the first and second rows of the repeating plurality of color sub-pixels may be equal to an integer multiple of a width of a color sub-pixel in a direction of the repeating plurality of color sub-pixels. In some embodiments, emitting 310 the directional light beams comprises using a plurality of multibeam columns spaced apart from one another along a length of the multiview display to emit the directional light beams. In particular, multibeam column of the multibeam column plurality is configured to emit a plurality of directional light beams. The directional light beams have principal directions corresponding to view directions of the multiview display. In some embodiments, the plurality of multibeam columns is the array of multibeam emitters. That is, a multibeam column of the multibeam column plurality comprises a column of multibeam emitters of the array of multibeam emitters wherein the multibeam emitters are offset from one another in a row direction to form a slanted column of multibeam emitters. In some embodiments, the multibeam column may comprise a continuous multibeam element or a single elongated multibeam element. The multibeam columns may be employed in a horizontal parallax-only display where the views are arranged in a horizontal parallax arrangement, as illustrated in Figure 4 for a horizontal parallax-only arrangement of the multiview display 100.

In some embodiments, emitting 310 directional light beams using an array of multibeam emitters comprises guiding light in a light guide as guided light. The light guide may be substantially similar to the light guide 140 of the multiview display 100, and light may be guided at a non-zero propagation angle between opposite internal surfaces of the light guide, in some embodiments. Emitting 310 the directional light beams using the array of multibeam emitters may further comprise scattering out a portion of the guided light using a multibeam element of an array of multibeam elements to provide the directional light beams. The multibeam element may be substantially similar to the multibeam element 130' of the multiview display 100. Further, the multibeam element may have a size comparable to a size of a light valve of the light valve array. For example, the size of the multibeam element may be comparable to the light valve size such that the multibeam element size is between about fifty percent (50%) and about two hundred percent (200%) of the light valve size. Further, the multibeam element may be the multibeam emitter array such that each multibeam element of the multibeam element array corresponds to a different multibeam emitter of the multibeam emitter array.

As illustrated in Figure 8, the method 300 of multiview display operation further comprises controlling 330 a view angle of the multiview image using a light control film. In some embodiments (e.g., when the multiview display is a horizontal parallax multiview display) the view angle may be controlled in a direction perpendicular to the horizontal parallax. According to some embodiments, the light control film may be substantially similar to the above-described light control film 150 of the multiview display 100. For example, the light control film may comprise micro-louvers and the light control axis may be defined as a direction perpendicular to a direction of the micro-louvers. In some embodiments, the light control film may be located between the array of light valves and a surface of the light guide, while the light valve array may be located between the light control film and the light guide surface, in other embodiments.

Thus, there have been described examples and embodiments of a multiview display and method having a light control film and comprising a repeating plurality of color sub-pixels arranged in rows and having an offset or shift configured to mitigate color fringing associated with the multiview image. It should be understood that the above-described examples are merely illustrative of some of the many specific examples that represent the principles described herein. Clearly, those skilled in the art can readily devise numerous other arrangements without departing from the scope as defined by the following claims.

## Claims

1. A multiview display comprising:
an array of light valves (110) having rows of a repeating plurality of color sub-pixels (112) and arranged as a plurality of multiview pixels configured to modulate directional light beams as color pixels of views of a multiview image, a first row of the repeating plurality of color sub-pixels (112) being offset from a second row of the repeating plurality of color sub-pixels (112) in a row direction by an integer multiple of a width of a color sub-pixel; and
a light control film (150) configured to control a view angle of the multiview image,
wherein the offset of the first and second rows is configured to provide corresponding color sub-pixels in adjacent multiview pixels having different colors to mitigate color fringing associated with the color pixel of the multiview image.

2. The multiview display of Claim 1, wherein each color sub-pixel of the repeating plurality of color sub-pixels (112) has a different color, the modulated light beams representing the respective different colors within the color pixels of the multiview image.

3. The multiview display of Claim 2, wherein the repeating plurality of color sub-pixels (112) comprises a red color sub-pixel, a green color sub-pixel, and a blue color sub-pixel.

4. The multiview display of Claim 1, further comprising an array of multibeam emitters (130) spaced apart from one another and configured to provide the directional light beams, a multibeam emitter of the multibeam emitter array having a size between one half and two times a size of a light valve of the light valve array.

5. The multiview display of Claim 4, wherein a different subset of color sub-pixels of the repeating plurality of color sub-pixels (112) of the array of light valves corresponds to each multibeam emitter of the multibeam emitter array, the different subset representing a multiview pixel of the plurality of multiview pixels of the multiview display.

6. The multiview display of Claim 4, further comprising a plurality of multibeam columns (135) spaced apart from one another along a length of the multiview display, a multibeam column of the plurality being configured to provide the directional light beams in a horizontal-only directional pattern,
wherein the plurality of multibeam columns (135) is the array of multibeam emitters and the multiview display is a horizontal parallax-only display, and wherein the light control film has a light control axis oriented orthogonal to the horizontal-only directional pattern of the directional light beams.

7. The multiview display of Claim 6, wherein the multibeam column comprises a continuous multibeam element.

8. The multiview display of Claim 4, further comprising:
a light guide (140) configured to guide light along a length of the light guide; and
an array of multibeam elements (130) spaced apart from one another along the light guide length, a multibeam element of the multibeam element array being configured to scatter out from the light guide (140) a portion of the guided light as the directional light beams,
wherein the multibeam element array is the multibeam emitter array, each multibeam element of the multibeam element array corresponding to a different multibeam emitter of the multibeam emitter array, and wherein the light control film is located between the light guide and the array of light valves and has a light control axis aligned with a column of multibeam elements of the multibeam element array.

9. The multiview display of Claim 8, wherein the multibeam element comprises one or more of a diffraction grating configured to diffractively scatter out the portion of the guided light as the directional light beams, a micro-reflective structure configured to reflectively scatter out the portion of the guided light as the directional light beams, and a micro-refractive structure configured to refractively scatter out the portion of the guided light as the directional light beams.

10. The multiview display of Claim 8, further comprising a broad-angle backlight (160) adjacent to a side of the light guide opposite to a side adjacent to the light valve array, the broad-angle backlight being configured to provide broad-angle emitted light during a two-dimensional (2D) mode of the multiview display, the light valve array being configured to modulate the broad-angle emitted light as a 2D image,
wherein the light guide (140) and multibeam element array are configured to be transparent to the broad-angle emitted light, the multiview display being configured to display the multiview image during a multiview mode and the 2D image during the 2D mode.

11. The multiview display of Claim 1, wherein the light control film has a light control axis aligned with a column of light valves of the light valve array.

12. A multiview display comprising:
an array of light valves (110) having a repeating plurality of color sub-pixels arranged in offset rows, light valves of the light valve array being arranged as multiview pixels configured to modulate directional light beams as color pixels of a multiview image;
an array of multibeam emitters (130) configured to illuminate different multiview pixels with different sets of the directional light beams; and
a light control film (150) configured to control a view angle of the multiview image, a light control axis of the light control film being aligned with a column of multibeam emitters of the multibeam emitter array,
wherein adjacent offset rows are offset from one another by an integer multiple of a width of a color sub-pixel, the offset between the adjacent rows being configured to provide a color sub-pixel of a first multiview pixel having a different color than a corresponding color sub-pixel of a second multiview pixel.

13. The multiview display of Claim 12, wherein a multibeam emitter (130) of the multibeam emitter array comprises an active optical emitter configured to emit light as the directional light beams, the active optical emitter having a size comparable to a size of a light valve of the light valve array.

14. The multiview display of Claim 12, further comprising:
a light guide (140) configured to guide light in a propagation direction along a length of the light guide; and
an array of multibeam elements (130) spaced apart from one another along the light guide length, a multibeam element of the multibeam element array corresponding to a multibeam emitter of the multibeam emitter array and having a size comparable to a size of a light valve of the light valve array and being configured to scatter out from the light guide a portion of the guided light as the directional light beams,
wherein the light valve array (110) is located between the light control film and the light guide.

15. A method of multiview display operation comprising:
emitting directional light beams using an array of multibeam emitters (130);
modulating the directional light beams using an array of light valves (110) having rows of a repeating plurality of color sub-pixels and arranged as a plurality of multiview pixels to provide a multiview image; and
controlling a view angle of the multiview image using a light control film (150) having a light control axis aligned with a column of multibeam emitters of the multibeam emitter array,
wherein a first row of the repeating plurality of color sub-pixels is offset from a second row of the repeating plurality of color sub-pixels to provide corresponding color sub-pixels in adjacent multiview pixels with different colors to mitigate color fringing associated with the color pixel of the multiview image being displayed by the multiview display.

## Patentansprüche

1. Mehrfachansichtsanzeige, die Folgendes umfasst:
ein Array von Lichtventilen (110), die Zeilen von sich wiederholenden mehreren Farbsubpixeln (112) aufweisen und als mehrere Mehrfachansichtspixel angeordnet sind, die zum Modulieren direktionaler Lichtstrahlen als Farbpixel von Ansichten eines Mehrfachansichtsbildes konfiguriert sind, wobei eine erste Zeile der sich wiederholenden mehreren Farbsubpixel (112) von einer zweiten Zeile der sich wiederholenden mehreren Farbsubpixel (112) in einer Zeilenrichtung um ein ganzzahliges Vielfaches einer Breite eines Farbsubpixels versetzt ist; und
einen Lichtsteuerfilm (150), der zum Steuern eines Sichtwinkels des Mehrfachansichtsbildes konfiguriert ist,
wobei der Versatz der ersten und zweiten Zeile zum Bereitstellen entsprechender Farbsubpixel in angrenzenden Mehrfachansichtspixeln mit unterschiedlichen Farben konfiguriert ist, um eine Farbsaumbildung abzuschwächen, die mit dem Farbpixel des Mehrfachansichtsbildes assoziiert ist.

2. Mehrfachansichtsanzeige nach Anspruch 1, wobei jedes Farbsubpixel der sich wiederholenden mehreren Farbsubpixel (112) eine unterschiedliche Farbe aufweist, wobei die modulierten Lichtstrahlen die jeweiligen unterschiedlichen Farben innerhalb der Farbpixel des Mehrfachansichtsbildes repräsentieren.

3. Mehrfachansichtsanzeige nach Anspruch 2, wobei die sich wiederholenden mehreren Farbsubpixel (112) ein rotes Farbsubpixel, ein grünes Farbsubpixel und ein blaues Farbsubpixel umfassen.

4. Mehrfachansichtsanzeige nach Anspruch 1, die ferner ein Array von Mehrstrahlemittern (130) umfasst, die voneinander beabstandet und zum Bereitstellen der direktionalen Lichtstrahlen konfiguriert sind, wobei ein Mehrfachstrahlemitter des Mehrfachstrahlemitterarrays eine Größe zwischen einer Hälfte und zweimal einer Größe eines Lichtventils des Lichtventilarrays aufweist.

5. Mehrfachansichtsanzeige nach Anspruch 4, wobei eine unterschiedliche Teilmenge von Farbsubpixeln der sich wiederholenden mehreren Farbsubpixel (112) des Arrays von Lichtventilen jedem Mehrfachstrahlemitter des Mehrfachstrahlemitterarrays entspricht, wobei die unterschiedliche Teilmenge ein Mehrfachansichtspixel der mehreren Mehrfachansichtspixel der Mehrfachansichtsanzeige repräsentiert.

6. Mehrfachansichtsanzeige nach Anspruch 4, die ferner mehrere Mehrfachstrahlspalten (135) umfasst, die voneinander entlang einer Länge der Mehrfachansichtsanzeige beabstandet sind, wobei eine Mehrfachstrahlspalte der mehreren zum Bereitstellen der direktionalen Lichtstrahlen in einem ausschließlich horizontalen direktionalen Muster konfiguriert ist, wobei die mehreren Mehrfachstrahlspalten (135) das Array von Mehrfachstrahlemittern sind und die Mehrfachansichtsanzeige eine Nur-Horizontalparallaxe-Anzeige ist, und wobei der Lichtsteuerfilm eine Lichtsteuerachse aufweist, die orthogonal zu dem nur horizontalen direktionalen Muster der direktionalen Lichtstrahlen ist.

7. Mehrfachansichtsanzeige nach Anspruch 6, wobei die Mehrfachstrahlspalte ein kontinuierliches Mehrfachstrahlelement umfasst.

8. Mehrfachansichtsanzeige nach Anspruch 4, die ferner Folgendes umfasst:
einen Lichtleiter (140), der zum Leiten von Licht entlang einer Länge des Lichtleiters konfiguriert ist; und
ein Array von Mehrfachstrahlelementen (130), die voneinander entlang der Lichtleiterlänge beabstandet sind, wobei ein Mehrfachstrahlelement des Mehrfachstrahlelementarrays zum Herausstreuen eines Teils des geleiteten Lichts aus dem Lichtleiter (140) als die direktionalen Lichtstrahlen konfiguriert ist,
wobei das Mehrfachstrahlelementarray das Mehrfachstrahlemitterarray ist, wobei jedes Mehrfachstrahlelement des Mehrfachstrahlelementarrays einem unterschiedlichen Mehrfachstrahlemitter des Mehrfachstrahlemitterarrays entspricht, und wobei sich der Lichtsteuerfilm zwischen dem Lichtleiter und dem Array von Lichtventilen befindet und eine Lichtsteuerachse aufweist, die mit einer Spalte von Mehrfachstrahlelementen des Mehrfachstrahlelementarrays ausgerichtet ist.

9. Mehrfachansichtsanzeige nach Anspruch 8, wobei das Mehrfachstrahlelement ein Beugungsgitter, das zum diffraktiven Herausstreuen des Teils des geleiteten Lichts als die direktionalen Lichtstrahlen konfiguriert ist, eine reflektierende Mikrostruktur, die zum reflektierenden Herausstreuen des Teils des geleiteten Lichts als die direktionalen Lichtstrahlen konfiguriert ist, und/oder eine refraktive Mikrostruktur, die zum refraktiven Herausstreuen des Teils des geleiteten Lichts als die direktionalen Lichtstrahlen konfiguriert ist, umfasst.

10. Mehrfachansichtsanzeige nach Anspruch 8, die ferner eine Weitwinkelhintergrundbeleuchtung (160) umfasst, die an eine Seite des Lichtleiters gegenüber der einer Seite angrenzt, die an das Lichtventilarray angrenzt, wobei die Weitwinkelhintergrundbeleuchtung zum Bereitstellen von mit weitem Winkel emittiertem Licht während eines zweidimensionalen (2D) Modus der Mehrfachansichtsanzeige konfiguriert ist, wobei das Lichtventilarray zum Modulieren des mit weitem Winkel emittierten Lichts als ein 2D-Bild konfiguriert ist,
wobei der Lichtleiter (140) und das Mehrfachstrahlelementarray so konfiguriert sind, dass sie für das mit weitem Winkel emittierte Licht transparent sind, wobei die Mehrfachansichtsanzeige zum Anzeigen des Mehrfachansichtsbildes während eines Mehrfachansichtsmodus und des 2D-Bildes während des 2D-Modus konfiguriert ist.

11. Mehrfachansichtsanzeige nach Anspruch 1, wobei der Lichtsteuerfilm eine Lichtsteuerachse aufweist, die mit einer Spalte von Lichtventilen des Lichtventilarrays ausgerichtet ist.

12. Mehrfachansichtsanzeige, die Folgendes umfasst:
ein Array von Lichtventilen (110) mit sich wiederholenden mehreren Farbsubpixeln, die in versetzten Zeilen angeordnet sind, wobei Lichtventile des Lichtventilarrays als Mehrfachansichtspixel angeordnet sind, die zum Modulieren direktionaler Lichtstrahlen als Farbpixel eines Mehrfachansichtsbild konfiguriert sind;
ein Array von Mehrfachstrahlemittern (130), die zum Beleuchten unterschiedlicher Mehrfachansichtspixel mit unterschiedlichen Sätzen der direktionalen Lichtstrahlen konfiguriert sind; und
einen Lichtsteuerfilm (150), der zum Steuern eines Sichtwinkels des Mehrfachansichtsbildes konfiguriert ist, wobei eine Lichtsteuerachse des Lichtsteuerfilms mit einer Spalte von Mehrfachstrahlemittern des Mehrfachstrahlemitterarrays ausgerichtet ist,
wobei angrenzende versetzte Zeilen um ein ganzzahliges Vielfaches einer Breite eines Farbsubpixels voneinander versetzt sind, wobei der Versatz zwischen den angrenzenden Zeilen zum Bereitstellen eines Farbsubpixels eines ersten Mehrfachansichtspixels mit einer anderen Farbe als ein entsprechendes Farbsubpixel eines zweiten Mehrfachansichtspixels konfiguriert ist.

13. Mehrfachansichtsanzeige nach Anspruch 12, wobei ein Mehrfachstrahlemitter (130) des Mehrfachstrahlemitterarrays einen aktiven optischen Emitter umfasst, der zum Emittieren von Licht als die direktionalen Lichtstrahlen konfiguriert ist, wobei der aktive optische Emitter eine Größe vergleichbar mit einer Größe eines Lichtventils des Lichtventilarrays aufweist.

14. Mehrfachansichtsanzeige nach Anspruch 12, die ferner Folgendes umfasst:
einen Lichtleiter (140), der zum Leiten von Licht in einer Propagationsrichtung entlang einer Länge des Lichtleiters konfiguriert ist; und
ein Array von Mehrfachstrahlelementen (130), die entlang der Lichtleiterlänge voneinander beabstandet sind, wobei ein Mehrfachstrahlelement des Mehrfachstrahlelementarrays einem Mehrfachstrahlemitter des Mehrfachstrahlemitterarrays entspricht und eine Größe vergleichbar mit einer Größe eines Lichtventils des Lichtventilarrays aufweist und zum Herausstreuen eines Teils des geleiteten Lichts aus dem Lichtleiter als die direktionalen Lichtstrahlen konfiguriert ist,
wobei sich das Lichtventilarray (110) zwischen dem Lichtsteuerfilm und dem Lichtleiter befindet.

15. Verfahren für eine Mehrfachansichtsanzeigenoperation, das Folgendes umfasst:
Emittieren direktionaler Lichtstrahlen unter Verwendung eines Arrays von Mehrfachstrahlemittern (130);
Modulieren der direktionalen Lichtstrahlen unter Verwendung eines Arrays von Lichtventilen (110), die Zeilen sich wiederholender mehrerer Farbsubpixel aufweisen und als mehrere Mehrfachansichtspixel angeordnet sind, um ein Mehrfachansichtsbild bereitzustellen; und
Steuern eines Sichtwinkels des Mehrfachansichtsbildes unter Verwendung eines Lichtsteuerfilms (150) mit einer Lichtsteuerachse, die mit einer Spalte von Mehrfachstrahlemittern des Mehrfachstrahlemitterarrays ausgerichtet ist,
wobei eine erste Zeile der sich wiederholenden mehreren Farbsubpixel von einer zweiten Zeile der sich wiederholenden mehreren Farbsubpixel versetzt ist, um entsprechende Farbsubpixel in angrenzenden Mehrfachansichtspixeln mit unterschiedlichen Farben bereitzustellen, um eine Farbsaumbildung abzuschwächen, die mit dem Farbpixel des Mehrfachansichtsbildes assoziiert ist, das durch die Mehrfachansichtsanzeige angezeigt wird.

## Revendications

1. Dispositif d'affichage multivues comprenant :
un réseau de modulateurs de lumière (110) ayant des rangées d'une pluralité répétitive de sous-pixels de couleur (112) et agencées comme une pluralité de pixels multivues configurés pour moduler des faisceaux lumineux directionnels en tant que pixels de couleur de vues d'une image multivues, une première rangée de la pluralité répétitive de sous-pixels de couleur (112) étant décalée d'une seconde rangée de la pluralité répétitive de sous-pixels de couleur (112) dans une direction de rangée par un multiple entier d'une largeur d'un sous-pixel de couleur ; et
un film de commande de la lumière (150) configuré pour commander un angle de vue de l'image multivues,
le décalage des première et seconde rangées étant configuré pour fournir des sous-pixels de couleur correspondants dans des pixels multivues adjacents ayant des couleurs différentes afin d'atténuer des franges de couleur associées au pixel de couleur de l'image multivues.

2. Dispositif d'affichage multivues selon la revendication 1, chaque sous-pixel de couleur de la pluralité répétitive de sous-pixels de couleur (112) ayant une couleur différente, les faisceaux lumineux modulés représentant les différentes couleurs respectives dans les pixels de couleur de l'image multivues.

3. Dispositif d'affichage multivues selon la revendication 2, la pluralité répétitive de sous-pixels de couleur (112) comprenant un sous-pixel de couleur rouge, un sous-pixel de couleur verte et un sous-pixel de couleur bleue.

4. Dispositif d'affichage multivues selon la revendication 1, comprenant en outre un réseau d'émetteurs multifaisceaux (130) espacés les uns des autres et configurés pour fournir les faisceaux lumineux directionnels, un émetteur multifaisceaux du réseau d'émetteurs multifaisceaux ayant une taille comprise entre la moitié et le double de la taille d'un modulateur de lumière du réseau de modulateurs de lumière.

5. Dispositif d'affichage multivues selon la revendication 4, un sous-ensemble différent de sous-pixels de couleur de la pluralité répétitive de sous-pixels de couleur (112) du réseau de modulateurs de lumière correspondant à chaque émetteur multifaisceaux du réseau d'émetteurs multifaisceaux, le sous-ensemble différent représentant un pixel multivues de la pluralité de pixels multivues du dispositif d'affichage multivues.

6. Dispositif d'affichage multivues selon la revendication 4, comprenant en outre une pluralité de colonnes multifaisceaux (135) espacées les unes des autres sur une longueur du dispositif d'affichage multivues, une colonne multifaisceaux de la pluralité étant configurée pour fournir les faisceaux lumineux directionnels selon un modèle directionnel horizontal uniquement,
la pluralité de colonnes multifaisceaux (135) constituant le réseau d'émetteurs multifaisceaux et le dispositif d'affichage multivues étant un dispositif d'affichage à parallaxe horizontal uniquement, et le film de commande de la lumière ayant un axe de commande de la lumière orienté orthogonalement au schéma directionnel horizontal uniquement des faisceaux lumineux directionnels.

7. Dispositif d'affichage multivues selon la revendication 6, la colonne multifaisceaux comprenant un élément multifaisceaux continu.

8. Dispositif d'affichage multivues selon la revendication 4, comprenant en outre :
un guide de lumière (140) configuré pour guider la lumière sur une longueur du guide de lumière ; et
un réseau d'éléments multifaisceaux (130) espacés les uns des autres sur la longueur du guide de lumière, un élément multifaisceaux du réseau d'éléments multifaisceaux étant configuré pour diffuser hors du guide de lumière (140) une partie de la lumière guidée sous forme de faisceaux lumineux directionnels,
le réseau d'éléments multifaisceaux étant le réseau d'émetteurs multifaisceaux, chaque élément multifaisceaux du réseau d'éléments multifaisceaux correspondant à un émetteur multifaisceaux différent du réseau d'émetteurs multifaisceaux, et le film de commande de la lumière étant situé entre le guide de lumière et le réseau de modulateurs de lumière et ayant un axe de commande de la lumière aligné sur une colonne d'éléments multifaisceaux du réseau d'éléments multifaisceaux.

9. Dispositif d'affichage multivues selon la revendication 8, l'élément multifaisceaux comprenant un ou plusieurs des éléments suivants : un réseau de diffraction configuré pour diffuser par diffraction la partie de la lumière guidée sous forme de faisceaux lumineux directionnels, une structure microréfléchissante configurée pour diffuser par réflexion la partie de la lumière guidée sous forme de faisceaux lumineux directionnels, et une structure microréfléchissante configurée pour diffuser par réfraction la partie de la lumière guidée sous forme de faisceaux lumineux directionnels.

10. Dispositif d'affichage multivues selon la revendication 8, comprenant en outre un rétroéclairage grand angle (160) adjacent à un côté du guide de lumière opposé à un côté adjacent au réseau de modulateurs de lumière, le rétroéclairage grand angle étant configuré pour fournir une lumière émise grand angle pendant un mode bidimensionnel (2D) du dispositif d'affichage multivues, le réseau de modulateurs de lumière étant configuré pour moduler la lumière émise grand angle en tant qu'image 2D,
le guide de lumière (140) et le réseau d'éléments multifaisceaux étant configurés pour être transparents à la lumière émise sous un grand angle, le dispositif d'affichage multivues étant configuré pour afficher l'image multivues en mode multivues et l'image 2D en mode 2D.

11. Dispositif d'affichage multivues selon la revendication 1, le film de commande de la lumière ayant un axe de commande de la lumière aligné avec une colonne de modulateurs de lumière du réseau de modulateurs de lumière.

12. Dispositif d'affichage multivues comprenant :
un réseau de modulateurs de lumière (110) ayant une pluralité répétitive de sous-pixels de couleur agencés en rangées décalées, les modulateurs de lumière du réseau de modulateurs de lumière étant agencés en tant que pixels multivues configurés pour moduler des faisceaux lumineux directionnels en tant que pixels de couleur d'une image multivues ;
un réseau d'émetteurs multifaisceaux (130) configuré pour éclairer différents pixels multivues avec différents ensembles de faisceaux lumineux directionnels ; et
un film de commande de la lumière (150) configuré pour commander un angle de vue de l'image multivues, un axe de commande de la lumière du film de commande de la lumière étant aligné sur une colonne d'émetteurs multifaisceaux du réseau d'émetteurs multifaisceaux,
des rangées de décalage adjacentes étant décalées les unes par rapport aux autres d'un multiple entier d'une largeur d'un sous-pixel de couleur, le décalage entre les rangées adjacentes étant configuré pour fournir un sous-pixel de couleur d'un premier pixel multivues ayant une couleur différente d'un sous-pixel de couleur correspondant d'un second pixel multivues.

13. Dispositif d'affichage multivues selon la revendication 12, un émetteur multifaisceaux (130) du réseau d'émetteurs multifaisceaux comprenant un émetteur optique actif configuré pour émettre de la lumière sous forme de faisceaux lumineux directionnels, l'émetteur optique actif ayant une taille comparable à celle d'un modulateur de lumière du réseau de modulateurs de lumière.

14. Dispositif d'affichage multivues selon la revendication 12, comprenant en outre :
un guide de lumière (140) configuré pour guider la lumière dans une direction de propagation sur une longueur du guide de lumière ; et
un réseau d'éléments multifaisceaux (130) espacés les uns des autres sur la longueur du guide de lumière, un élément multifaisceaux du réseau d'éléments multifaisceaux correspondant à un émetteur multifaisceaux du réseau d'émetteurs multifaisceaux et ayant une taille comparable à celle d'un modulateur de lumière du réseau de modulateurs de lumière et étant configuré pour diffuser hors du guide de lumière une partie de la lumière guidée sous forme de faisceaux lumineux directionnels,
le réseau de modulateurs de lumière (110) étant situé entre le film de commande de la lumière et le guide de lumière.

15. Procédé d'opération de dispositif d'affichage multivues comprenant :
l'émission de faisceaux lumineux directionnels à l'aide d'un réseau d'émetteurs multifaisceaux (130) ;
la modulation des faisceaux lumineux directionnels à l'aide d'un réseau de modulateurs de lumière (110) ayant des rangées d'une pluralité répétitive de sous-pixels de couleur et agencées comme une pluralité de pixels multivues pour fournir une image multivues ; et
la commande d'un angle de vue de l'image multivues à l'aide d'un film de commande de la lumière (150) dont l'axe de commande de la lumière est aligné sur une colonne d'émetteurs multifaisceaux du réseau d'émetteurs multifaisceaux,
une première rangée de la pluralité répétitive de sous-pixels de couleur étant décalée par rapport à une seconde rangée de la pluralité répétitive de sous-pixels de couleur afin de fournir des sous-pixels de couleur correspondants dans des pixels multivues adjacents avec des couleurs différentes pour atténuer des franges de couleur associées au pixel de couleur de l'image multivues affichée par le dispositif d'affichage multivues.
